Europäisches Patentamt

European Patent Office

Office européen des brevets

(11) Numéro de publication: **0 477 852 A1**

## DEMANDE DE BREVET EUROPEEN

(21) Numéro de dépôt: **91116226.1**

(22) Date de dépôt: **24.09.91**

(51) Int. Cl.⁵: **H04L 27/22**

(30) Priorité: **28.09.90 FR 9012002**

(43) Date de publication de la demande:
**01.04.92 Bulletin 92/14**

(84) Etats contractants désignés:
**CH DE ES FR GB IT LI NL SE**

(71) Demandeur: **ALCATEL TELSPACE**
**5, rue Noel Pons**
**F-92734 Nanterre Cédex(FR)**

(84) **DE ES FR GB IT NL SE**

(71) Demandeur: **ALCATEL N.V.**
**Strawinskylaan 341**

**NL-1077 XX Amsterdam(NL)**

(84) **CH LI**

(72) Inventeur: **Peltier, Jacques**
**78, rue de l'Aqueduc**
**F-75010 Paris(FR)**
Inventeur: **Lopez, Pierre**
**14, rue de Torcy**
**F-75018 Paris(FR)**

(74) Mandataire: **Weinmiller, Jürgen et al**
**Lennéstrasse 9 Postfach 24**
**W-8133 Feldafing(DE)**

(54) **Système de récuperation de porteuse pour modulation numérique à l'états de phase.**

(57) Un système de récupération de porteuse pour modulations quadratiques numériques utilisant un égaliseur numérique auto-adaptatif (100) caractérisé en ce que l'estimateur de phase de porteuse (D) est obtenu à partir des coefficients centraux (Cxy,Cyx) des voies croisées de l'égaliseur numérique.
Application aux modems pour les faisceaux hertziens numériques.

## FIG.2

L'invention concerne un système de récupération de porteuse pour modulations quadratiques numériques.

Dans le domaine des faisceaux hertziens numériques, les modems numériques font appel à des modulations à plusieurs états de phase pour augmenter la capacité de transport du média. Parmi les modulations numériques à plusieurs états de phase, on connaît les modulations quadratiques dans lesquelles on utilise les possibilités offertes par deux porteuses orthogonales issues d'un même oscillateur.

Les faisceaux hertziens ne pouvant échapper aux troubles de propagations, on a recours à l'utilisation d'un égaliseur numérique auto-adaptatif dans les récepteurs pour atténuer les effets de distorsion dûs au dédoublement des signaux modulés en quadrature.

Il est courant d'utiliser, en réception, une démodulation cohérente en faisant appel à un système de récupération de porteuse pour asservir un oscillateur local. Ceci a conduit à engendrer l'estimateur de phase de porteuse à partir des symboles obtenus en sortie de l'égaliseur numérique auto-adaptatif pour bénéficier des performances de celui-ci.

L'estimateur de Costas, bien connu de l'homme de l'art, présente de faibles performances pour les modulations plurivalentes. En particulier, pour des modulations à plus de quatre états de phase, l'estimateur de Costas ne prend en compte qu'une partie des symboles sur la grille d'estimation.

La démodulation cohérente reposant essentiellemnt sur la qualité et la fiabilité de l'estimateur de phase, on préfère avoir recours à l'estimateur de Leclert et Vandamme pour des modulations à grand nombre d'états telles que les modulations quadratiques numériques.

Toutefois lorsqu'on met en oeuvre l'estimateur de Leclert et Vandamme dans un système de récupération de porteuse utilisant un égaliseur numérique auto-adaptatif, on constate que cet estimateur est incompatible avec les algorithmes de calculs des coefficients de l'égaliseur. Ainsi tant pour l'algorithme "ZERO FORCING" que pour l'algorithme "MMSE", l'estimateur de Leclert et Vandamme n'est plus corrélé au signe du déphasage de la porteuse récupérée lorsque les coefficients de l'égaliseur convergent vers leurs valeurs optimales et ne permet donc pas d'asservir l'oscillateur en bande de base pour corriger les défauts de phase.

Pour résoudre ce problème, une solution connue consiste à forcer à zéro la valeur des coefficients centraux des voies croisées de l'égaliseur pour que l'estimateur de phase de Leclert et Vandamme soit de nouveau corrélé au signe du déphasage de la porteuse récupérée. Cependant cette solution handicape l'égaliseur numérique puisqu'alors celui-ci est incapable de compenser en bande de base un défaut de quadrature.

L'invention a pour objet de pallier les inconvénients cités de l'état de la technique en proposant un système de récupération de porteuse pour modulations quadratiques numériques, qui n'affecte pas les coefficients centraux des voies croisées de l'égaliseur numérique auto-adaptatif pour s'affranchir des défauts de quadrature en bande de base et dont le critère de récupération de porteuse reste fiable lors du fonctionnement optimal de l'égaliseur numérique.

Dans cette optique, l'invention propose de ne plus extraire le critère de récupération de porteuse à partir des symboles engendrés en sortie de l'égaliseur numérique, mais à partir des coefficients centraux des voies croisées de celui-ci.

A cet effet l'invention concerne un système de récupération de porteuse pour modulations quadratiques numériques utilisant un égaliseur numérique auto-adaptatif remarquable en ce que l'estimateur de phase de porteuse est obtenu à partir des coefficients centraux des voies croisées de l'égaliseur numérique.

Plus précisément, l'estimateur de phase de porteuse est déterminé par le signe de la différence desdits coefficients centraux des voies croisées de l'égaliseur numérique.

Comme cela apparaîtra par la suite, le système de récupération de porteuse selon l'invention permet un asservissement en phase de l'oscillateur local et en même temps permet une correction du défaut de quadrature (émission et réception).

D'autres caractéristiques et avantages de l'invention ressortiront encore mieux de la description suivante donnée à titre d'exemple non limitatif et des dessins annexés dans lesquels :

- la figure 1 est un schéma illustrant un défaut de phase et de quadrature de deux porteuses orthogonales;
- la figure 2 illustre la génération du critère de récupération de porteuse selon l'invention.

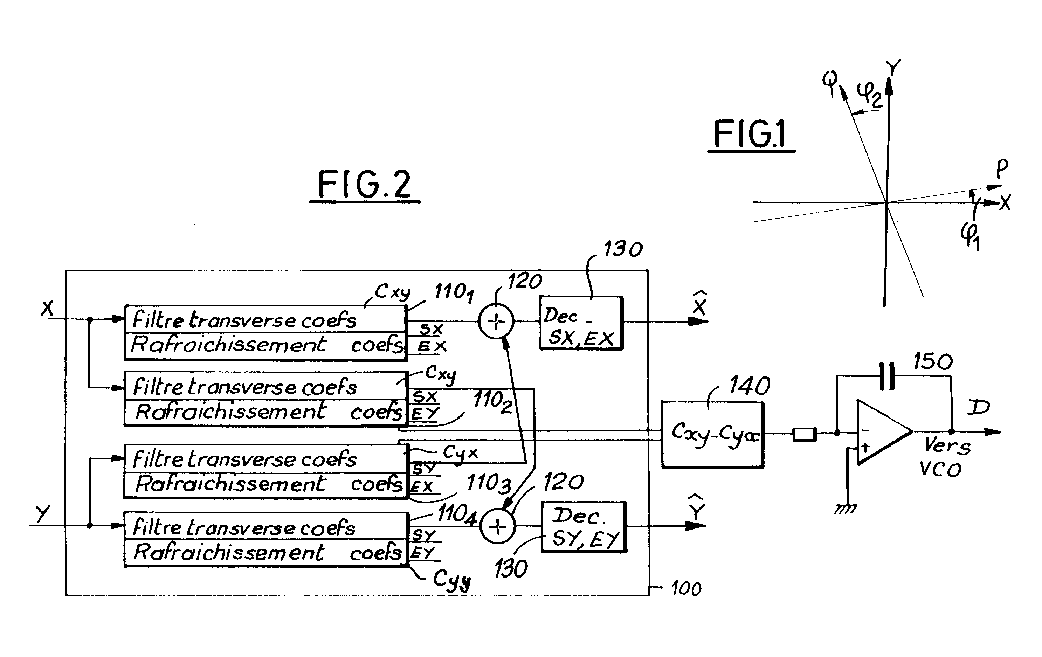

En se reportant à la figure 1, on a représenté dans l'espace de regénération XY, deux porteuses P,Q présentant un défaut de phase (écart de phase $\phi 1$ de P par rapport à X) et un défaut de quadrature ( écart de phase $\phi 2$ de Q par rapport à Y).

L'estimateur de phase D selon l'invention est donné par la formule :

(1)     $D = \dfrac{\sin(\phi 1) + \sin(\phi 2)}{\cos(\phi 1 - \phi 2)}$

On convient qu'un défaut de quadrature de porteuses peut être modélisé par un quadripôle ayant pour matrice :

$$(2) \qquad Q = \begin{pmatrix} \cos\varphi_1 - \sin\varphi_2 \\ \sin\varphi_1 \quad \cos\varphi_2 \end{pmatrix}$$

mis en cascade avec un égaliseur numérique auto-adaptatif de matrice de transfert H. L'algorithme "ZERO FORCING", par exemple, tend à faire tendre le produit matriciel Q*K vers la matrice identité pour corriger le défaut de quadrature.

En fonctionnement optimal de l'égaliseur numérique auto-adaptatif, les coefficients centraux de l'égaliseur numérique convergent vers les valeurs solutions du système d'équation:

$$
\begin{aligned}
(3) \qquad \cos(\varphi_1).Cxx - \sin(\varphi_2).Cyx &= 1 \\
\cos(\varphi_1).Cxy - \sin(\varphi_2).Cyy &= 0 \\
\sin(\varphi_1).Cxx + \cos(\varphi_2).Cyx &= 0 \\
\sin(\varphi_1).Cxy + \cos(\varphi_2).Cyy &= 1
\end{aligned}
$$

où Cxx,Cyy,Cxy,Cyx représentent les coefficients centraux des filtres numériques transverses respectivement pour les voies directes et les voies indirectes de l'égaliseur numérique.

Après regroupement et réduction des membres du système d'équations (3) on obtient :

$$(4) \qquad Cxy = {}^{\sin(\phi_2)}\!/_{\cos(\phi_1 - \phi_2)}$$

$$(5) \qquad Cyx = {}^{-\sin(\phi_1)}\!/_{\cos(\phi_1 - \phi_2)}$$

On retrouve la formule (1) en faisant (4)-(5). Par conséquent un défaut de phase des porteuses orthogonales est corrélé à la différence Cxy - Cyx. Cette différence ou le signe de cette différence est donc un bon estimateur de phase.

Les coefficients centraux des voies croisées de l'égaliseur numérique n'étant pas forcés, celui-ci permet de s'affranchir des défauts de quadrature (dus à l'émission et à la réception).

Ainsi le système de récupération de porteuse selon l'invention utilise l'égaliseur numérique pour corriger les défauts de quadrature et extraire un critère de récupération de porteuse suffisamment fiable pour assurer la démodulation en bande de base. Le système de récupération de porteuse décrit ci-dessus est adapté pour toutes modulations quadratiques numériques plurivalentes puisque les valeurs des coefficients centraux des voies croisées de l'égaliseur numérique sont indépendantes du type de modulation mise en oeuvre.

On remarquera aussi que l'algorithme "MMSE" conduit aux mêmes valeurs pour les coefficients centraux des voies croisées et pourra donc être utilisé avec le système de récupération de porteuse selon l'invention.

En se reportant maintenant à la figure 2, on a représenté à titre d'exemple un schéma de la structure d'un égaliseur numérique auto-adaptatif 100 fonctionnant selon l'algorithme "ZERO FORCING". L'égaliseur numérique auto-adaptatif 100 comprend deux filtres numériques transverses $110_1, 110_4$ affectés aux voies directes XX' et YY' et deux filtres numériques transverses $110_2, 110_3$ affectés aux voies croisées XY',YX', des moyens additionneurs 120 de signaux pour les voies directes et les voies croisées, et des moyens décodeur 130 pour fournir le signe des symboles Sx,Sy et le signe d'erreur des symboles Ex,Ey par rapport à la grille d'estimation pour la mise à jour des coefficients de filtrage. Les coefficients centraux Cxy,Cyx des filtres transverses affectés aux voies croisées sont extraits pour être fournis à un circuit différenciateur 140 qui fournit la valeur de l'estimateur de phase D. La valeur de l'estimateur de phase D est appliquée à un circuit intégrateur 150 pilotant l'oscillateur local. De façon avantageuse, on pourra prévoir que la valeur de l'estimateur de phase D est directement fournie par l'égaliseur numérique pour une réalisation intégrée de celui-ci.

Bien entendu, l'invention n'est pas limitée à l'exemple de réalisation ci-dessus décrit et on pourra prévoir d'autres modes de réalisation sans pour cela sortir du cadre de l'invention.

**Revendications**

1. Système de récupération de porteuse pour modulations quadratiques numériques, utilisant un égaliseur numérique autoadaptatif (100), **caractérisé** en ce que l'estimateur de phase de porteuse (D) est obtenu à partir des coefficients centraux (Cxy,Cyx) des voies croisées de l'égaliseur numérique.

2. Système de récupération de porteuse selon la revendication 1, dans lequel l'estimateur de phase de porteuse est déterminé par le signe de la différence desdits coefficients centraux des voies croisées.

EP 0 477 852 A1

## FIG.2

## FIG.1

Filtre transverse coefs $C_{xy}$ $110_1$
Rafraichissement coefs $\frac{SX}{EX}$

Filtre transverse coefs $C_{xy}$
Rafraichissement coefs $\frac{SX}{EY}$ $110_2$

Filtre transverse coefs $C_{yx}$
Rafraichissement coefs $\frac{SY}{EX}$ $110_3$

Filtre transverse coefs
Rafraichissement coefs $\frac{SY}{EY}$ $110_4$ $C_{yy}$

X

Y

120

130

Dec. SX,EX

$\hat{X}$

120

130

Dec. SY,EY

$\hat{Y}$

140

$C_{xy}-C_{yx}$

150

D

Vers VCO

100

**Office européen des brevets**

# RAPPORT DE RECHERCHE EUROPEENNE

Numéro de la demande

**EP 91 11 6226**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 004 226  (QURESHI ET. AL.)<br>* colonne 1, ligne 6 - ligne 40; figure 2 * *<br>– – – | 1 | H 04 L 27/22 |
| A | US-A-4 085 378  (RYAN ET. AL.)<br>* colonne 1, ligne 7 - ligne 42 * * * colonne 4, ligne 38 - ligne 62; figure 2 * *<br>– – – – – | 1 | |

| | |
|---|---|
| | **DOMAINES TECHNIQUES RECHERCHES (Int. Cl.5)**<br><br>H 04 L |

Le présent rapport de recherche a été établi pour toutes les revendications

| Lieu de la recherche | Date d'achèvement de la recherche | Examinateur |
|---|---|---|
| La Haye | 09 décembre 91 | WAGNER U. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
 
& : membre de la même famille, document correspondant